# EUROPEAN PATENT SPECIFICATION

(11) **EP 1 225 123 B1**
(45) Date of publication and mention of the grant of the patent: **14.06.2006**
(21) Application number: 01101165.7
(22) Date of filing: 23.01.2001
(51) Int. Cl.: B62K 23/06

(54) **Handlebar accelerator for an electrical bicycle**
Handbetätigbare Beschleunigungsvorrichtung für ein elektrisch angetriebenes Fahrrad
Accélérateur pour bicyclette électrique

(43) Date of publication of application: 24.07.2002
(73) Proprietor: Strong, Samuel Y.T., Tainan, Taiwan - R.O.C. (TW)
(72) Inventor: Strong, Samuel Y.T., Tainan, Taiwan - R.O.C. (TW)
(74) Representative: Casalonga, Axel

(56) References cited:
- US-A- 6 038 923

## Description

### 1. Field of the Invention

The present invention is related to a handlebar for an electrical bicycle, and more particularly to a handlebar accelerator used for adjusting the speed of a motor fitted to the bicycle.

### 2. Description of Related Art

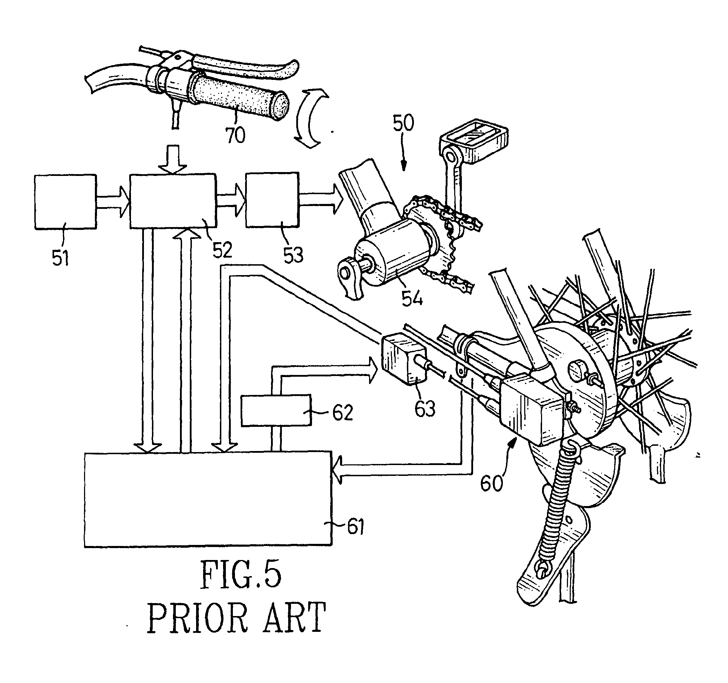

Referring to Fig. 5, a conventional electrical bicycle has a driving device (50) and a speed adjuster device (60). The driving device (50) is composed of a battery (51), a motor driving circuit (52), a relay (53), and an electric motor (54). The speed adjuster device (60) has a processor (61), a driving circuit (62), a servo mechanism (63) and sensors (not shown or numbered). A handlebar accelerator (70) is provided at a handlebar at the head of the bicycle to change the speed of the electric motor (54) and thus the bicycle. The handlebar accelerator (70) has a rotatable sleeve, and an examining element (not shown or numbered) provided therein and electrically connected with the processor (61) by wires. The handlebar accelerator (70) further includes a plurality of fixed magnetic members (not shown or numbered). When the sleeve is turned relative to the fixed magnetic members, the examining element registers the change between the sleeve and the magnetic members, and sends a signal to the speed adjuster device (60) which then changes the speed of the electric motor (54).

However, the wires will become stretched by the handlebar accelerator (70) because they are moved when the handlebars are moved. After such stretching over a period of time, the wires have a serious risk of being disengaged from the examining element, and even broken.

US Patent 6,038,923 discloses a cable-free accelerator device for an electric bicycle. This document discloses a Hall-effect generator inside the grip which has two magnets securely received therein. Therefore, when the grip is rotated, the Hall-effect generator is able to detect the movement of the two magnets and a corresponding voltage is thus generated. The generated corresponding voltage is transformed into a control signal and then is transmitted to the-speed adjuster to change the electric bicycle speed. Beacause there is no cable involved, damage to the cable is climinated. However, this structure requires a lot of alterations to the current electric bicycle such that manufacturing costs of such a bicycle are high

Therefore, the invention provides a handlebar accelerator for an electrical bicycle to mitigate and/or obviate the aforementioned problem.

The main objective of the present invention is to provide a handlebar accelerator for an electrical bicycle which can prevent wires from being disengaged from an examining element, or even broken.

Other objects, advantages and novel features of the invention will become more apparent from the following detailed description when taken in conjunction with the accompanying drawings.
In the drawings:
Fig. 1 is an exploded perspective view of a handlebar accelerator for an electrical bicycle in accordance with the present invention;
Fig. 2 is a side sectional view of the handlebar accelerator in Fig. 1;
Fig. 3 is a cross sectional view of the handlebar accelerator in Fig. 1;
Fig. 4 is a side sectional view showing that the handlebar accelerator is turned to adjust a speed of the bicycle; and
Fig. 5 is a schematic view of a conventional electrical bicycle.

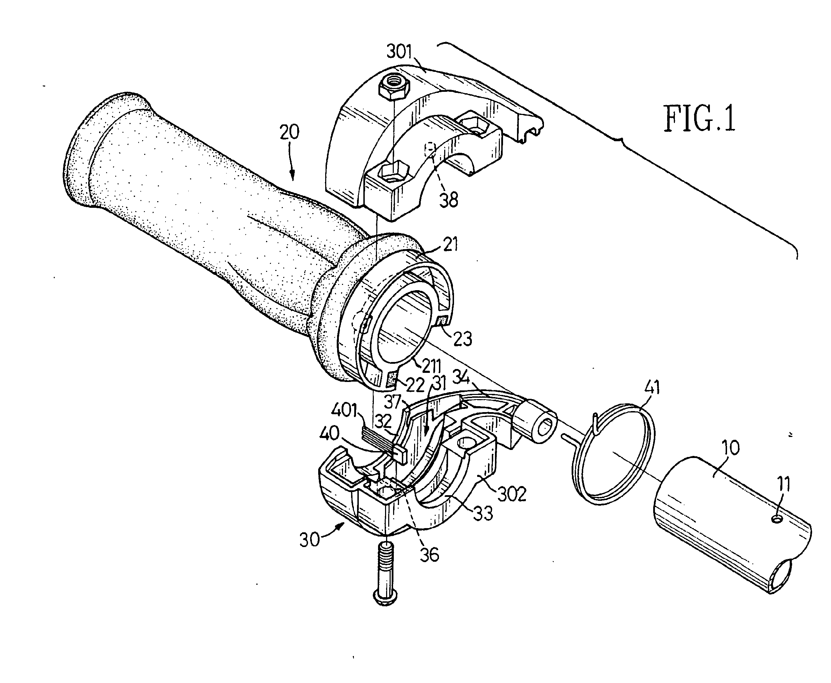

Referring to Figs. 1-3, a handlebar accelerator for an electrical bicycle in accordance with the invention is composed of a bar (10), a tubular grip (20), and a joint (30) by which the grip (20) is rotatably mounted on the bar (10).

The grip (20) has a ring (21) shaped as a "C" and formed at a first end thereof. The ring (21) has a sector notch (211) defined therein and two magnetic members (22, 23) are respectively formed at two ends of the notch (211).

The joint (30) is composed of an upper semi-joint (301) and a lower semi-joint (302) engaged together by a screw and a nut. A channel (31) is internally defined in the joint (30) for receiving the ring (21). A first hole (32) is defined at a first side of the joint (30) for the first end of the grip (20) to extend therein, and a second hole (33) is defined at a second side of the joint (30) for one end of the bar (10) to extend therein. A passage (34) extends between the channel (31) and an outlet of the joint (30). An examining element (40) is provided in the joint (30), and wires (35) leading from a speed adjuster device (not shown) extend through the passage (34) to electrically connect with the examining element (40). A slot (36) is defined in the channel (31) for securing in place the examining element (40). A groove (37) is defined beside the channel (31), and in communication with the slot (36) and the passage (34). Legs (401) of the examining element (40) are bent such that free ends thereof can be received in the groove (37). The wires (35) extend in the groove (37) to electrically connect with the legs (401). Connecting points between the wires (35) and the legs (401) are securely located in the groove (37).

Moreover, a torsion spring (41) is provided in the joint (30) with a first end fixed in the channel (31) and a second end fixed in the ring (21). By the torsion spring (41), the grip (20) can automatically return to an original position after having been rotated relative to the joint (30) and then released.

Furthermore, a pin (38) is formed on an inner wall of the second hole (33) and inserted in an aperture (11) defined at a periphery of the bar (10) to fasten the joint (30) on the bar (10).

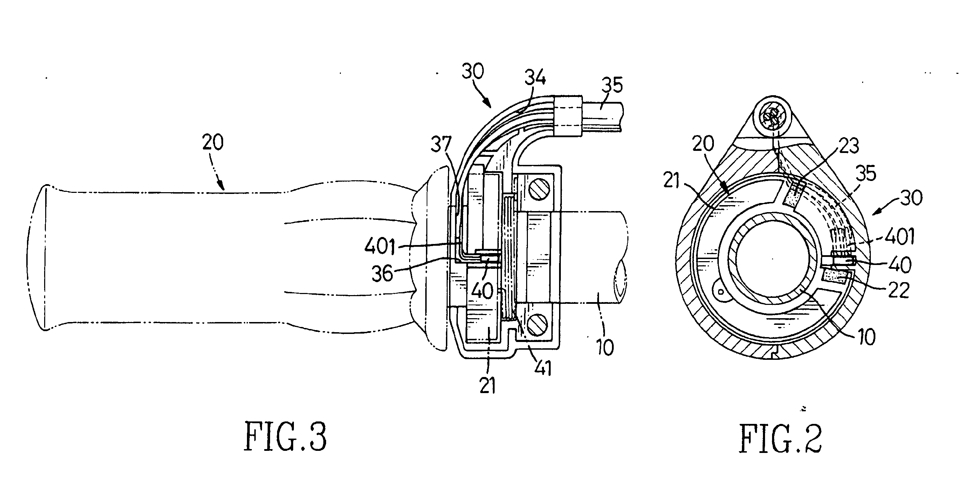

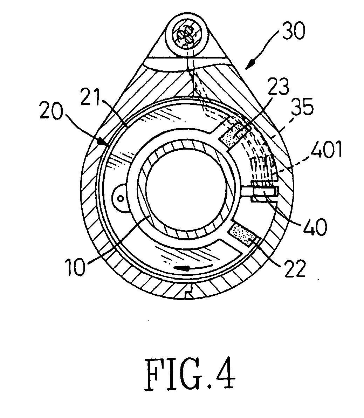

Referring to Figs. 3 and 4, to change a speed of an electric motor fitted to the electric bicycle, the rider turns the grip (20) whereby the magnetic members (22, 23) are moved with respect to the examining element (40) which will then detect the movement and send a signal to the speed adjuster device to change the speed of the electric motor, and thus the speed of the electric bicycle.

Because the examining element (40) and the wires (35) are fixed in the joint (30) and the grip (21) will not stretch the wires (35), the wires (35) cannot be broken. Furthermore, the connecting points between the wires (35) and legs (401) are securely located within the groove (37) to provide a fine electrical connecting effect.

It is to be understood, however, that even though numerous characteristics and advantages of the present invention have been set forth in the foregoing description, together with details of the structure and function of the invention, the disclosure is illustrative only, and changes may be made in detail, especially in matters of shape, size, and arrangement of parts within the principles of the invention to the full extent indicated by the broad general meaning of the terms in which the appended claims are expressed.

## Claims

1. A handlebar accelerator for an electric bicycle, including an electric motor, a battery, a circuit between the motor and the battery, a speed adjuster device, and wires extending from the circuit and electrically connected with the speed adjuster device, the handlebar accelerator comprising:
a bar (10);
a grip (20) having two magnetic elements (22, 23);
a joint (30) being composed of an upper semi-joint (301) and a lower semi-joint (302), the joint (30) having a first hole (32) defined at a first side for receiving the first end of the grip (20), a second hole (33) defined at a second side for receiving one end of the bar (10)
an examining element (40) electrically connected with the wires
**characterized in that** a ring (21) is formed at a first end of the grip (20) and has a sector notch (211) defined therein, said two magnetic elements are respectively formed at two ends of the sector notch (211), a channel (31) is defined in the joint (30) for receiving the ring (21), a slot (36) defined in the channel (31), a groove (37) defined beside the channel (31), a passage (34) in communication with the channel (31) and the groove (37) and extending outwards, and the wires extending from the passage (34), the examining element and the wires are fixed in the joint (30) and securely located within the groove (37).

2. The handlebar accelerator for an electric bicycle as claimed in claim 1, wherein the examining element (40) further comprises legs (401) bent to extend in the groove (37) and electrically connected with the wires (35) respectively.

3. The handlebar accelerator for an electric bicycle as claimed in claim 1, wherein the second hole (33) further comprises a pin (38) formed at an inner wall thereof to engage in an aperture (11) defined in the bar (10), whereby the joint is non-rotatably secured with the bar (10).

4. The handlebar accelerator for an electric bicycle as claimed in claim 1, wherein a torsion spring is mounted between the joint and the grip, the torsion spring having a first end secured to the joint and a second end secured to the grip, whereby the grip automatically returns to an original position after the grip has been rotated away from the original position and then released.

## Patentansprüche

1. Ein Lenkstangengashebel für ein elektrisches Fahrrad, das einen elektrischen Motor, eine Batterie, einen Stromkreis zwischen dem Motor und der Batterie, eine Geschwindigkeitseinstellervorrichtung und vom Stromkreis erstreckende und mit der Geschwindigkeitseinstellervorrichtung elektrisch verbundene Drähte beinhaltet und der Lenkstangengashebel Folgendes umfasst:
eine Stange (10);
ein über zwei magnetische Elemente (22, 23) verfügender Griff (20);
ein Gelenk (30), das aus einem oberen Halbgelenk (301) und einem unteren Halbgelenk (302) zusammengesetzt ist, das Gelenk (30) über ein erstes Loch (32), das auf einer ersten Seite zum Tragen des ersten Endes des Griffs (20) festgelegt ist, und ein zweites Loch (33), das an einer zweiten Seite zum Tragen eines Endes der Stange (10) festgelegt ist, verfügt;
ein elektrisch mit den Drähten verbundenes Prüfelement (40)
**dadurch gekennzeichnet, dass** ein Ring (21) an einem ersten Ende des Griffs (20) geformt ist und über eine darin festgelegte Sektorkerbe (211) verfügt, besagte zwei magnetischen Elemente demgemäß an den Enden der Sektorkerbe (211) geformt sind, ein Kanal (31) zum Tragen des Ringes (21) in dem Gelenk (30) festgelegt ist, ein Schlitz (36) in dem Kanal (31) festgelegt ist, eine Rille (37) neben dem Kanal (31) festgelegt ist, ein Gang (34) in Verbindung mit dem Kanal (31) und der Rille (37) steht und sich nach außen erstreckt, und die sich von dem Gang (34) erstreckenden Drähte, das Prüfelement und die Drähte fest im Gelenk (30) angebracht sind und sicher innerhalb der Rille (37) liegen.

2. Der Lenkstangengashebel für ein wie in Anspruch 1 beanspruchtes elektrisches Fahrrad, wobei das Prüfelement (40) weiter Füße (401) umfasst, die, um sich in der Rille (37) zu erstrecken, gebogen sind und demgemäß elektrisch mit den Drähten (35) verbunden sind.

3. Der Lenkstangengashebel für ein wie in Anspruch 1 beanspruchtes elektrisches Fahrrad, wobei das zweite Loch (33) weiter einen Stift (38) umfasst, der an einer Innenwand davon geformt ist, um in eine im Lenker (10) festgelegte Öffnung (1) einzurasten, wobei das Gelenk unrotierbar am Lenker (10) gesichert ist.

4. Der Lenkstangengashebel für ein wie in Anspruch 1 beanspruchtes elektrisches Fahrrad, wobei eine Drehungsfeder zwischen der Verbindungsstelle und dem Griff anmontiert ist, die Drehungsfeder über ein an der Verbindungsstelle gesichertes erstes Ende und ein am Griff gesichertes zweites Ende verfügt, wobei der Griff automatisch auf seine ursprüngliche Position zurückkehrt, nachdem der Griff aus der ursprünglichen Position weggedreht worden ist und dann losgelassen worden ist.

## Revendications

1. Accélérateur de guidon pour bicyclette électrique, comprenant un moteur électrique, une batterie, un circuit placé entre le moteur et la batterie, un dispositif de réglage de vitesse et des fils qui partent du circuit et sont connectés électriquement au dispositif de réglage de vitesse, l'accélérateur comprenant :
un tube (10) ;
une poignée (20) comportant deux éléments magnétiques (22, 23) ;
une jonction (30) composée d'une demi-jonction supérieure (301) et d'une demi-jonction inférieure (302), la jonction (30) comportant un premier trou (32) défini sur un premier côté pour recevoir la première extrémité de la poignée (20), un deuxième trou (33) défini sur un deuxième côté pour recevoir une extrémité du tube (10) ;
un élément de détection (40) connecté électriquement aux fils ;
**caractérisé en ce qu'**une bague (21) est formée en une première extrémité de la poignée (20) et comporte une encoche en secteur (211) définie dedans, lesdits deux éléments magnétiques sont respectivement formés aux deux extrémités de l'encoche en secteur (211), une gorge (31) est définie dans la jonction (30) pour recevoir la bague (21), une fente (36) définie dans la gorge (31), une rainure (37) définie à côté de la gorge (31), un passage (34) communiquant avec la gorge (31) et la rainure (37) et s'étendant vers l'extérieur, et les fils s'étendant depuis le passage (34), l'élément de détection et les fils étant fixés dans la jonction (30) et immobilisés dans la rainure (37).

2. Accélérateur de guidon pour bicyclette électrique selon la revendication 1, dans lequel l'élément de détection (40) comprend en outre des branches (401) courbées pour se placer dans la rainure (37) et connectées électriquement aux fils (35) de manière respective.

3. Accélérateur de guidon pour bicyclette électrique selon la revendication 1, dans lequel le deuxième trou (33) comprend en outre un ergot (38) formé dans sa paroi intérieure, destiné à s'engager dans une ouverture (11) définie dans le tube (10), grâce à quoi la jonction est fixée au tube (10) de façon non rotative.

4. Accélérateur de guidon pour bicyclette électrique selon la revendication 1, dans lequel un ressort de torsion est monté entre la jonction et la poignée, le ressort de torsion ayant une première extrémité fixée à la jonction et une deuxième extrémité fixée à la poignée, grâce à quoi la poignée revient automatiquement à sa position d'origine suite à une rotation hors de sa position d'origine et après avoir été relâchée.
